# EUROPÄISCHE PATENTSCHRIFT

(11) **EP 1 741 962 B1**
(45) Veröffentlichungstag und Bekanntmachung des Hinweises auf die Patenterteilung: **30.11.2011**
(21) Anmeldenummer: 06013790.8
(22) Anmeldetag: 04.07.2006
(51) Int. Cl.: F16H 61/22, F16H 59/10

(54) **Schalteinrichtung für ein Wandlergetriebe**
Shifting device for a transmission
Dispositif de changement de vitesses pour une boîte de vitesses

(30) Priorität: 05.07.2005 DE 202005010646 U
(43) Veröffentlichungstag der Anmeldung: 10.01.2007
(73) Patentinhaber: Dura Automotive Systems Einbeck GmbH, 37574 Einbeck (DE)
(72) Erfinder: Deuse, Mario, 37077 Göttingen (DE)
(74) Vertreter: Sobisch, Peter

(56) Entgegenhaltungen:
- DE-A1- 4 120 379
- DE-B3- 10 361 209
- DE-C1- 19 818 864

## Beschreibung

Die Erfindung bezieht sich auf eine Schalteinrichtung für ein Wandlergetriebe entsprechend dem Oberbegriff des Anspruchs 1.

Für bei Kraftfahrzeugen benutzte Automatik- bzw. Wandlergetriebe besteht bekanntlich die Forderung, dass eine Änderung der Wählposition des Wählhebels nur unter bestimmten vorgebbaren Bedingungen zulässig, im Übrigen jedoch gesperrt ist. Es ist dies ein Gebot der Betriebssicherheit - gleichzeitig wird auch das Getriebe vor übermäßigen mechanischen Belastungen geschützt. Diese Bedingungen werden beispielsweise durch eine Betätigung des Bremspedales, durch die aktuelle Fahrzeuggeschwindigkeit usw. dargestellt und unter Mitwirkung einer Motorsteuerung verarbeitet. Es ist allgemein bekannt, den Wählhebel mit einer Verriegelungseinrichtung auszurüsten, und zwar in der Form eines magnetisch bewegbaren Bolzens, der beispielsweise in einem Wählhebelgehäuse gleitfähig gelagert und mit einer Bohrung oder einer Ausnehmung eines mit dem Wählhebel in Verbindung stehenden Bauteils in einen Eingriff bringbar ist. Solange der Eingriffszustand gegeben ist, ist eine Bewegung des Wählhebels verriegelt. Sobald die Bedingungen gegeben sind, unter denen ein Wählvorgang zulässig ist, wird der Verriegelungszustand aufgehoben. Eine vergleichbare Situation besteht bei CVT-Getrieben und automatisierten Getrieben.

Problematisch ist bei den bekannten Ausführungsformen eines Verriegelungsmechanismus eine Betätigung des Wählhebels "unter Last", nämlich dann, wenn der Wählvorgang eingeleitet wird, bevor der Eingriff zwischen dem Bolzen und der diesem zugeordneten Ausnehmung gelöst ist. Denn die über den Wählhebel ausgeübte Kraft wird mehr oder weniger direkt auf das System aus Bolzen und Ausnehmung übertragen, so dass es zu einem Klemmen des Bolzens in der Ausnehmung kommen kann und der Eingriffszustand durch eine Magnetkraft oder die Rückstellkraft einer Feder alleine nicht gelöst werden kann. Eine bekannte, aber praktisch unbefriedigende Lösung dieses Problems besteht darin, den manuellen Druck auf den Wählhebel kurzfristig zu lösen so dass der Eingriffszustand "lastfrei" gelöst und anschließend der Wählvorgang ausgeführt werden kann.

Aus dem gattungsgemäßen Dokument DE 198 18 864 C1 ist eine Schalteinrichtung für ein automatisches Kraftfahrzeuggetriebe bekannt, bei welcher ein zur Darstellung von Wählbewegungen um eine Achse in einem Gehäuse drehbar gelagerter Wählhebel mit einem Verriegelungsmechanismus in Wirkverbindung steht, der dazu bestimmt ist, nach Maßgabe vorgebbarer Bedingungen Wählbewegungen des Wählhebels entweder zu sperren oder freizugeben. Der Verriegelungsmechanismus umfasst einen Magnetantrieb, dessen Anker unmittelbar mit dem einen Ende eines Wipphebels in Eingriff steht, wobei das andere Ende des Wipphebels mit einer, durch eine Kniehebelanordnung gebildeten Verriegelungsmechanismus nach Maßgabe der Bestromung des Magnetantriebs im Eingriff steht. Nach Maßgabe der Anlage eines an dem Kniehebelgelenk befindlichen Riegelteils in einer, an dem Wipphebel angeformten Ausnehmung ist über den Antrieb eine Wählbewegung des Wählhebels verriegelt oder freigegeben. Die Kniehebelanordnung in Verbindung mit dem Wipphebel sind derart angelegt, dass über den Wählhebel bei Wählbewegungen eingeleitete Kräfte im Bereich des in der Ausnehmung anliegenden Riegelteils nur mit einer hohen Untersetzung wirksam sind.

Aus dem Dokument DE 101 61 209 B3 ist eine zum Übertragen von Wählbewegungen bestimmte Schalteinrichtung für ein Automatikgetriebe eines Kraftfahrzeugs bekannt, bei der ein Wählhebel in einem Gehäuse um Achse drehbar gelagert ist und mit einem Verriegelungsmechanismus in Wirkverbindung steht, der in Abhängigkeit vorgebbarer Bedingungen zur Verriegelung oder zu Sperrung von Wählbewegungen eingerichtet ist. Der Verriegelungsmechanismus umfasst einen Magnetantrieb, der zur Herstellung sowie zur Lösung eines formschlüssigen Eingriffs zwischen dem Wipphebel und einer Übertragungseinrichtung eingerichtet ist, die ihrerseits zur Übertragung von Wählbewegungen mit dem Wählhebel in Verbindung steht. Die Kraftübertragungsverhältnisse sind mit der Maßgabe eingerichtet, dass über den Wählhebel eingeleitete Kräfte im Bereich der miteinander im Eingriff stehenden Riegelteile und Ausnehmungen stark untersetzt wirksam sind.

Schließlich ist aus dem Dokument DE 41 20 379 A1 eine weitere Schalteinrichtung für Automatikgetriebe eines Kraftfahrzeugs bekannt, dessen Wählhebel in einem Gehäuse um eine Achse drehbar gelagert ist und mit einem Verriegelungsmechanismus zusammenwirkt, der einen Antrieb umfasst, der zur Herstellung sowie zur Freigabe eines formschlüssigen Eingriffs zwischen einem drehbar gelagerten Wipphebel und einer mit dem Wählhebel in Wirkverbindung stehenden Übertragungseinrichtung bestimmt und eingerichtet ist. Die Kraftübertragungsverhältnisse sind mit der Maßgabe angelegt, dass über den Wählhebel eingeleitete Kräfte zwischen dem Wipphebel und der Übertragungseinrichtung lediglich stark untersetzt wirksam sind.

Es ist vor diesem Hintergrund die Aufgabe der Erfindung, eine Schalteinrichtung für einen Wählhebel der eingangs bezeichneten Art mit Hinblick auf ein schnelles Ausführen von Wählvorgängen auch unter Last hin auszugestalten. Gelöst ist diese Aufgabe bei einer solchen Schalteinrichtung durch die Merkmale des Kennzeichnungsteils des Anspruchs 1.

Dies Ausgestaltung des mit dem Wählhebel zusammenwirkenden Verriegelungsmechanismus ist der Art, dass die bei der Ausführung von Wählbewegungen über den Wählhebel ausgeübte Kraft nur in untersetzter Form im Eingriffsbereich der Verriegelungsteile mit den Ausnehmungen zur Einwirkung kommt. Zu diesem Zweck ist eine Übertragungseinrichtung vorgesehen, welche das Bindeglied zwischen dem Wählhebel und dem genannten Eingriffsbereich bildet, deren Zweck in der Bereitstellung dieser Kraftuntersetzung besteht. Diese Untersetzung ist in jedem Fall derart beschaffen, dass ein bestehender Eingriff mittels des vorhandenen Antriebs, z.B. eines Magnetantriebs gelöst werden kann, und zwar ohne dass es infolge der über den Wählhebel über tragenen Kraft zu Klemmerscheinungen oder dergleichen kommt. Das Einlegen einer anderen Wählposition kann somit auch "unter Last" erfolgen, falls die eine Änderung der Wählposition erlaubenden Bedingungen gegeben sind. Im Bereich des Antriebes werden aufgrund der Untersetzung somit geringe Kräfte wirksam, woraus sich gleichermaßen auch der Vorteil ergibt, dass mit diesen geringen Kräften eine zuverlässige Verriegelung der Wählposition gegeben ist. Wesentlich für die erfindungsgemäße Übertragungseinrichtung ist, dass ein Verriegelungselement vorgesehen ist, das um eine gehäusefeste Achse drehbar gelagert ist und gleichzeitig über einen Zapfen mit einem Bauteil in Wirkverbindung steht, welches seinerseits in fester Verbindung mit dem Wählhebel steht, und insbesondere dessen Wählbewegungen unterliegt. Der Zapfen ist in einem Führungsschlitz des Verriegelungselements gleitfähig geführt, so dass über den Wählhebel und den Zapfen eine Mitnahmewirkung auf das Verriegelungselement ausübbar ist. Die eingangs genannte Kraftuntersetzung bezüglich eines durch die gehäusefeste Achse des Verriegelungselementes definierbaren Drehpunktes beruht auf dessen unterschiedlichen Abständen zu dem Zapfen einerseits und dem Eingriffspunkt des Riegel und der mit diesem zusammenwirkenden Ausnehmung andererseits.

Das Riegelteil bzw. die Ausnehmung, welche zum Zusammenwirken mit entsprechenden Gegenelementen des Wipphebels bestimmt sind, befinden sich entsprechend den Merkmalen des Anspruchs 2 in jedem Fall auf einem von der gehäusefesten Achse entfernt gelegenen Abschnitt des Verriegelungsteils. Auf diese Weise ist das eingangs genannte Untersetzungsverhältnis konstruktiv einfach realisierbar.

Die Merkmale der Ansprüche 3 und 4 sind auf alternative Formen der Ausbildung des Verriegelungselementes gerichtet, welches hiernach als Scheibenelement oder auch als langgestreckter Schwenkhebel realisierbar ist, wobei in jedem Fall die Lage des Zapfens und des genannten Eingriffspunktes relativ zu der gehäusefesten Achse zur Darstellung des erwünschten Untersetzungsverhältnisses wesentlich ist.

Die Merkmale des Anspruchs 5 sind auf die Ausgestaltung des Führungsschlitzes gerichtet. Dieser ist als geradliniger Schlitz ausgebildet, der mit der Maßgabe angeordnet ist, dass über eine Wählbewegung des Wählhebels eine Mitnahmewirkung auf diesen ausübbar ist. Seine Länge ist unter anderem durch den Schwenkbereich des Wählhebels bestimmt.

Grundsätzlich ist entsprechend den Merkmalen des Anspruchs 6 für jede zu verriegelnde Wählposition ein Verriegelungselement vorgesehen.

Entsprechend den Merkmalen der Ansprüche 7 und 8 sind zwei, hinsichtlich ihrer Schwenkbewegungen um die genannten gehäusefesten Achsen kinematisch miteinander verknüpfte Verriegelungselemente vorgesehen, wobei die Verknüpfung dadurch dargestellt ist, dass der genannte Zapfen die Führungsschlitze beider Verriegelungselemente durchdringt, so dass bei einer Wählbewegung eine Mitnahmewirkung auf beide Verriegelungselemente ausübbar ist. Die Verknüpfung ist ferner unter Anpassung an die Lage sowie die Abmessungen des Wipphebels mit der Maßgabe angelegt, dass entsprechend zwei Drehwinkelstellungen zwei Verriegelungspositionen darstellbar sind, in denen jeweils ein Verriegelungselement mit dem Wipphebel zwecks Darstellung einer Verriegelungsposition und auf diese Weise einer Wählposition im Eingriff steht.

Zur Darstellung von zwei Schaltstellungen bzw. Drehwinkelstellungen des Wipphebels bezüglich dessen Achse kann dieser entsprechend den Merkmalen des Anspruchs 9 in einer Drehrichtung durch eine Feder, z. B. eine Torsionsfeder beaufschlagt sein, wobei in der anderen Richtung ein Antrieb, beispielsweise ein Magnetantrieb wirksam ist. Dieses Konzept ist besonders einfach realisierbar und erfordert einen Magnetantrieb mit lediglich einem Wicklungssystem.

Die Merkmale der Ansprüche 10 bis 12 sind auf alternative Ausführungsformen des Antriebs einschließlich dessen Zusammenwirkens mit dem Wipphebel ge richtet. Im einfachsten Fall besteht der Antrieb aus einem geradlinig unter Mitwirkung eines Wicklungssystems magnetisch bewegbaren Anker, dessen eine Schaltstellung magnetisch und dessen andere Schaltstellung mittels einer Feder darstellbar ist. Möglich ist auch ein mit zwei Wicklungssystemen unterschiedlicher magnetischer Polarität zusammenwirkender Anker, dessen beide Schaltstellungen somit magnetisch darstellbar sind. Nachdem in diesem Fall über den Anker Zug- und Druckkräfte übertragbar sind, muss die Anbindung an den Wipphebel dem angepasst werden. Schließlich kommt auch ein mit zwei Ankern und zwei Wicklungssystemen ausgerüsteter Antrieb in Betracht, dessen Anker den Wipphebel beiderseits dessen Achse beaufschlagen.

Man erkennt anhand der vorstehenden Ausführungen, dass in der erfindungsgemäßen Schalteinrichtung ein Bauelement zur Verfügung gestellt wird, welches einen raschen und behinderungsfreien Wechsel der Wählposition des Wählhebels eines Wandlergetriebes auch "unter Last" ermöglicht. Die Schalteinrichtung weist einen mechanisch einfachen und funktionssicheren, ein geringes Bauvolumen beanspruchenden Aufbau auf.

Die Erfindung wird im Folgenden unter Bezugnahme auf die in den Zeichnungen schematisch wiedergegebenen Ausführungsbeispiele einer Schalteinrichtung näher erläutert werden. Es zeigen:
Fig. 1 eine Darstellung einer Schalteinrichtung mit einem in der Position P verriegelten Wählhebel mit einer ersten Ausführungsform eines Verriegelungsmechanismus;
Fig. 2 eine Darstellung des Wählhebels gemäß Fig. 1 in der Verriegelungsposition N;
Fig. 3 eine Darstellung des ausgehend von der Position P entriegelten Wählhebels gemäß Fig. 1;
Fig. 4 eine Darstellung des ausgehend von der Position N entriegelten Wählhebels gemäß Fig. 1;
Fig. 5 eine Darstellung einer Schalteinrichtung mit einem in der Position N verriegelten Wählhebel mit einer zweiten Ausführungsform eines Verriegelungsmechanismus;
Fig. 6 eine Darstellung des Wählhebels gemäß Fig. 5 in der Verriegelungsposition P.

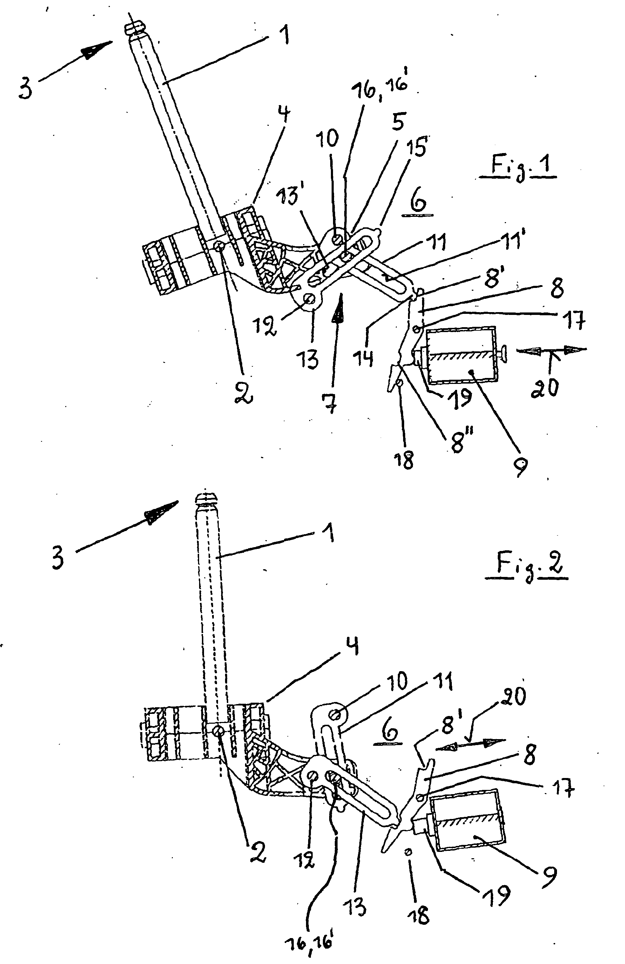

Mit 1 ist in Fig. 1 ein Wählhebel für ein Wandlergetriebe bezeichnet, der in einem nicht näher dargestellten Gehäuse um eine gehäusefeste Achse 2 schwenkbar gelagert und in diversen Drehwinkelstellungen um diese Achse, welche Wählpositionen entsprechen, verriegelbar ist. Der Wählhebel 1 ist in an sich bekannter Weise als stab- bzw. röhrenförmiger Grundkörper ausgebildet und an seinem freien, in den Fahrgastraum des jeweiligen Fahrzeugs hineinragenden Ende 3 mit einem Schaltknauf versehen.

Mit dem Wählhebel 1 bezüglich der Achse 2 drehfest verbunden ist ein Wählarm 4, an dessen freiem Ende 5 sich ein erfindungsgemäßer Verriegelungsmechanismus 6 befindet, der mit der Maßgabe ausgebildet ist, eine gewählte Wählposition zu verriegeln und einen Wechsel dieser Wählposition nur unter bestimmten, extern vorgebbaren Bedingungen zuzulassen, wie zum Beispiel eine Betätigung des Bremspedals, einer aktuellen Geschwindigkeit unterhalb eines vorgebbaren Wertes der Geschwindigkeit usw.

Der Verriegelungsmechanismus 6 besteht aus einer Schwenkhebelanordnung 7, einem Wipphebel 8 und einem Magnetschalter 9, der eine Schnittstelle bildet, über welche das Vorliegen externer, einen Wechsel der Wählposition erlaubender Bedingungen signalisierbar ist. Diese Bedingungen werden vorzugsweise durch ein elektrisches Signal dargestellt, mit welchem der Magnetschalter 9 beaufschlagbar ist.

Die Schwenkhebelanordnung 7 besteht aus einem ersten, um eine gehäusefeste Achse 10 drehbar gelagerten Schwenkhebel 11 und einem zweiten, um eine ebenfalls gehäusefeste Achse 12 drehbar gelagerten Schwenkhebel 13. Der Begriff "gehäusefest" bezieht sich auf das Wählhebelgehäuse. Die Schwenkhebel 11, 13 sind im Wesentlichen ähnlich ausgebildet und umschließen jeweils einen langgestreckten Führungsschlitz 11', 13'. Die genannten, sich parallel zueinander erstreckenden Achsen 10, 12 sind voneinander beabstandet angeordnet und es erstrecken sich die beiden Schwenkhebel 11, 13 ausgehend von diesen Achsen 10, 12 mit der Maßgabe, dass sich die beiden Führungsschlitze 11', 13' - in der Richtung der genannten Achsen bzw. in der Zeichenebene gesehen - einander teilweise überdecken.

Jeder Schwenkhebel 11, 13 ist an seinem, seiner Achse 10, 12 abgekehrten Ende mit einem Riegelteil 14, 15 versehen, das zum formschlüssigen Zusammenwirken mit korrespondierenden Ausnehmungen 8', 8" des Wipphebels 8 bestimmt ist. Diese beiden, entlang des Wipphebels 8 voneinander beabstandeten Ausnehmungen 8', 8" sind jeweils den Wählpositionen P und N zugeordnet.

Mit 16 ist ein mit dem Wählarm 4 in fester Verbindung stehender Zapfen bezeichnet, dessen Achse 16' sich parallel zu der Achse 2 erstreckt und der gleichzeitig die beiden Führungsschlitze 11', 13' durchdringt, so dass nach Lage der Achsen 10, 12, die sich parallel zu der Achse 2 des Wählhebels 1 erstrecken, eine Schwenkbewegung des Wählhebels 1 eine zwangsläufige Bewegung der beiden Schwenkhebel 10, 13 auslöst.

Der Wipphebel 8 ist um eine, sich parallel zu der Achse 2 erstreckende Achse 17 drehbar angeordnet, wobei eine Drehbewegung um diese Achse entgegen dem Uhrzeigersinn durch einen Anschlag 18 begrenzt ist.

Der Magnetschalter 9, der den Antrieb für den Wipphebel 8 bildet, besteht im einfachsten Fall aus einem stabförmigen Anker 19, der in Richtung der Pfeile 20 beweglich angeordnet ist, sowie einem zeichnerisch nicht dargestellten Wicklungssystem. Das Wicklungssystem und der Anker 19 können mit der Maßgabe angelegt sein, dass der Anker im bestromten Zustand des Wicklungssystems die in Fig. 2 gezeigte ausgefahrene Position einnimmt, in welcher der Wipphebel 8 ausgehend von seiner, an dem Anschlag 18 anliegenden Position im Uhrzeigersinn verschwenkt ist. Zur Überführung in die in Fig. 1 gezeigte zurückgezogene Position des Ankers 19 ist eine zeichnerisch nicht dargestellte Rückstellfeder vorgesehen.

Mit 8"' ist eine in etwa kreisabschnittförmige Anformung des Wipphebels 8 bezeichnet, die sich auf dessen, dem Anker 19 zugekehrter Seite befindet und dazu dient, eine verlustarme Abrollbewegung auf der Stirnseite des Ankers 19 zu erreichen.

Die Wirkungsweise des Verriegelungsmechanismus 6 des Wählhebels 1 gestaltet sich vor diesem Hintergrund wie folgt:

In der in Fig. 1 dargestellten Position P des Wählhebels 1 befindet sich der Magnetschalter 9 in einem stromlosen Zustand, so dass sich der Anker 19 in einer zurückgezogenen Position befindet und der Wipphebel 8 beispielsweise unter dem Einfluß einer zeichnerisch nicht dargestellten, mit der Achse 17 zusammenwirkenden Torsionsfeder an dem Anschlag 18 anliegt.

Die durch die Lage der Achsen 10, des Zapfens 16 sowie dem sich in der Ausnehmung 8' befindlichen Riegelteil 14 des Schwenkhebels 11 bestimmten Übertragungsverhältnisse sind durch einen geringen Abstand der Achse 10 von dem Zapfen 16 sowie einen im Vergleich hierzu großen Abstand zwischen der Achse 10 und dem Eingriffsbereich von Riegelteil 14 und Ausnehmung 8' gekennzeichnet. Dies bedeutet, dass durch einen vergleichsweise geringen Kraftaufwand im Bereich der Ausnehmung 8' des Wipphebels 8 eine vergleichsweise große Kraft auf die Achse 16' des Zapfens 16 ausgeübt werden kann. Aufgrund dieses Umstands ist eine zuverlässige Verriegelung des Wählhebels 1 in dieser Wählstellung gegeben, die alleine durch eine Rückstellfeder gesichert ist.

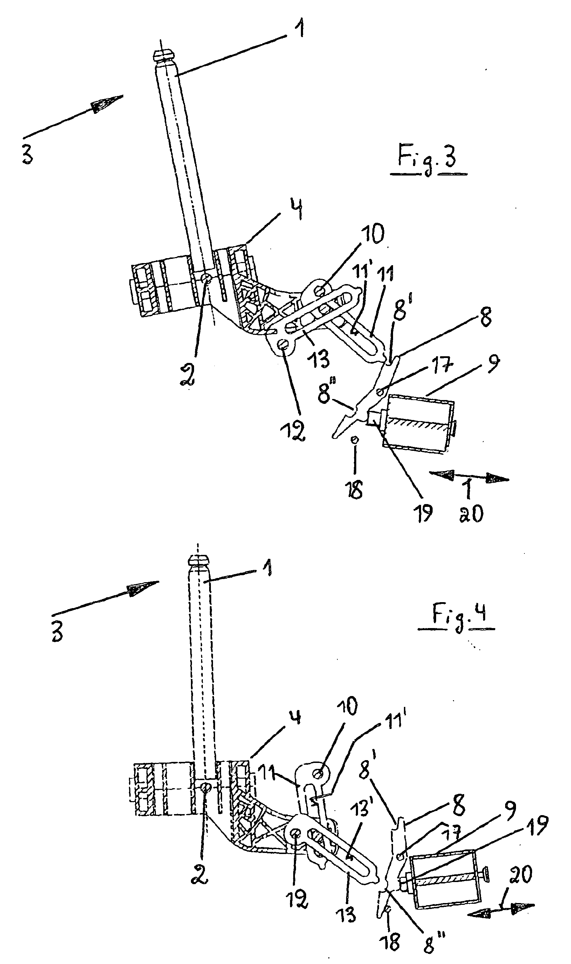

Wird ausgehend von der in Fig. 1 gezeigten Position P des Wählhebels 1 der Magnetschalter 9 bestromt, führt dies zu der in Fig. 3 dargestellten Situation. Der Anker 19 bewegt sich entgegen der Kraft einer Rückstellfeder aus dem Magnetschalter 9 heraus und bewirkt eine Drehung des Wipphebels 8 im Uhrzeigersinn von dem Anschlag 18 fort, so dass der Eingriff zwischen dem Riegelteil 14 und der Ausnehmung 8' gelöst wird. Aufgrund der vorstehend dargelegten Übertragungsverhältnisse kann der Wählhebel 1 unter Last betätigt werden, ohne dass es im Bereich der Ausnehmung 8' zu einem Verkanten oder zu Klemmerscheinungen kommt. Denn die über den Anker 19 ausübbare Kraft kann ohne weiteres dahingehend bemessen werden, dass trotz der über den Wählhebel 1 ausgeübten Kraft ein Lösen des Eingriffs zwischen dem Riegelteil 14 und der Ausnehmung 8' behinderungsfrei möglich ist.

In der in Fig. 2 gezeigte Stellung N des Wählhebels 1 befindet sich das Riegelteil 15 im Eingriff mit der Ausnehmung 8". Der Magnetschalter 9 ist nunmehr bestromt, so dass die Kraft zur Sicherung dieser Wählposition magnetisch aufgebracht wird. Dies ist aufgrund der bestehenden Übertragungsverhältnisse, welche einen lediglich geringen Kraftaufwand im Bereich des Wipphebels 8 erforderlich machen, ohne weiteres möglich.

Es kann andererseits, wie in Fig. 4 gezeigt, der Verriegelungszustand in der Position N durch Betätigung des Wählhebels 1 aufgehoben werden, wobei wiederum aufgrund der herrschenden Übertragungsverhältnisse ein von Verkantungs- und Klemmerscheinungen freies Lösen des Eingriffs zwischen dem Riegelteil 15 und der Ausnehmung 8" möglich ist.

Man erkennt anhand der vorstehenden Beschreibung, dass sowohl für die Position P als auch die Position N jeweils ein Schwenkhebel 11, 13 vorgesehen ist und dass die eine dieser beiden Positionen durch die Kraft einer Rückstellfeder und die andere magnetisch gesichert ist.

Der Wipphebel 8 kann global eine kreiselementförmige oder in sonstiger Weise gekrümmte Gestalt aufweisen, wobei sich die vorstehend genannten Ausnehmungen 8', 8" radial erstrecken. Auf die mit diesen Ausnehmungen 8', 8" zusammenwirkenden Riegelteile 14, 15 wird somit im Eingriffsfall eine Kraft in peripherer Richtung ausgeübt. Zweckmäßigerweise sind der Abstand der Ausnehmungen 8', 8" in Verbindung mit der Anordnung der Achsen 10, 12 sowie der Achse 16' des Zapfens 16 dahingehend angelegt, dass sich der jeweilige, in der Verriegelungsposition befindliche Schwenkhebel 11, 13 im Wesentlichen radial zur Krümmung des Wipphebels 8 erstreckt und dahingehend, dass der Abstand zwischen der Achse 16' des Zapfens 16 und der jeweiligen Achse 10, 12 des Schwenkhebels 11, 13 minimal wird.

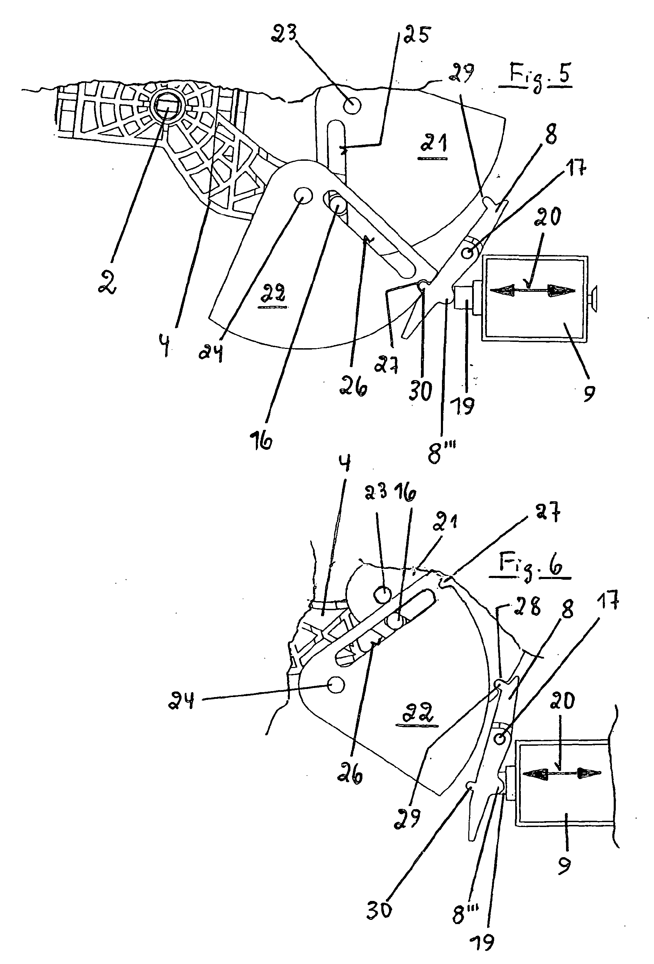

In den Figuren 5 und 6 ist lediglich beispielhaft eine weitere Ausführungsform eines, ein Schalten unter Last ermöglichenden Verriegelungsmechanismus für einen Wählhebel 1 dargestellt, wobei übereinstimmende Funktionselemente entsprechend beziffert sind, so dass auf eine diesbezügliche wiederholte Beschreibung verzichtet werden kann.

Das System der langgestreckten Schwenkhebel 11, 13 ist bei diesem Ausführungsbeispiel durch zwei, die Gestalt von kreissegmentförmigen Scheibenelementen 21, 22 ersetzt worden, die jeweils um gehäusefeste Achsen 23, 24 drehbar gelagert sind. Beide Scheibenelemente 21, 22 erstrecken sich parallel zueinander und sind mit Führungsschlitzen 25, 26 versehen, in denen ein mit dem Wählarm 4 in Verbindung stehender Zapfen 16 geführt ist. Über diesen Zapfen 16 sind Schwenkbewegungen der Scheibenelemente 21, 22 wiederum zwangsläufig miteinander verknüpft.

In den Umfangsbereich der Scheibenelemente 21, 22 ist jeweils eine Ausnehmung 27, 28 eingeformt, wobei diese, sich bezüglich der Krümmung der Scheibenelemente 21, 22 radial erstreckenden, global U-förmigen Ausnehmungen 27, 28 zum Zusammenwirken mit Riegelteilen 29, 30 eingerichtet sind, die auf der, den Scheibenelementen 21, 22 zugekehrten Seite eines Wipphebels 8 angeordnet sind.

Der Wipphebel 8 hat eine im Wesentlichen geradlinige langgestreckte Gestalt - er kann gleichermaßen auch eine an die Scheibenelemente 21, 22 angepasste Krümmung aufweisen. Die Riegelteile 29, 30 sowie die Ausnehmungen 27, 28 sind in jedem Fall mit der Maßgabe angelegt, dass sie durch Verschwenkung der Scheibenelemente miteinander in einen Eingriff bringbar sind.

In jedem Fall sind die Lage der Achsen 23, 24 der Scheibenelemente 21, 22, der Achse 17 des Wipphebels 8, der Abstand der Riegelelemente 29, 30 und der Ausnehmungen 27, 28 sowie die Lage und Anordnung der beiden Führungsschlitze 25, 26 mit der Maßgabe angelegt, dass in analoger Weise wie bei dem vorstehend anhand der Figuren 1 bis 4 erläuterten Ausführungsbeispiel die Positionen P und N des in den Figuren 5 und 6 nicht dargestellten Wählhebels verriegelbar sind, und zwar in der Position N durch einen Eingriff des Riegelteils 30 mit der Ausnehmung 27 und in der Position P durch einen Eingriff des Riegelteils 29 mit der Ausnehmung 28.

In der in Fig. 5 dargestellten Position N ist wiederum das Wicklungssystem des Magnetschalter 9 bestromt, so dass sich der Anker 19 in der ausgefahrenen Position befindet und eine Verriegelung dieser Position des Wipphebels 8 somit magnetisch erfolgt. In der in Fig. 6 gezeigten Position P hingegen ist das Wicklungssystem des Magnetschalters 9 stromlos, so dass sich der Anker in einer Rückzugsposition befindet und eine Sicherung dieser Verriegelungsposition auf der Kraft einer zeichnerisch nicht dargestellten Rückstellfeder beruht.

Ebenfalls in gleicher Weise wie bei dem ersteren Ausführungsbeispiel kann durch Bestromung des Wicklungssystems des Magnetschalters 9 bzw. durch Unterbrechung einer Bestromung dieses Wicklungssystems der Wipphebel 8 unter dem Einfluß einer Magnetkraft bzw. unter dem Einfluß einer Federkraft zwecks Lösung des Eingriffs zwischen den Riegelteilen 29, 30 und den diesen zugeordneten Ausnehmungen 27, 28 der Wählhebel unter Last ohne Verkantungen oder Klemmerscheinungen in eine andere Wählposition überführt werden. Dies wird auch bei diesem zweiten Ausführungsbeispiel durch die geometrisch bedingten Kraftübertragungsverhältnisse bezüglich der gehäusefesten Achsen 23, 24 erreicht.

## Patentansprüche

1. Schalteinrichtung für ein Wandlergetriebe eines Kraftfahrzeugs mit einem zur Darstellung von Wählbewegungen um eine Achse (2) in einem Gehäuse drehbar gelagerten Wählhebel (1) und einem Verriegelungsmechanismus (6), der nach Maßgabe vorgebbarer Bedingungen zur Sperrung oder zur Freigabe von Wählbewegungen des Wählhebels (1) eingerichtet ist, wobei der Verriegelungsmechanismus (6) einen Antrieb zur Herstellung sowie zur Lösung eines formschlüssigen Eingriffs zwischen einem Riegelteil (14,15;29,30) und einer Ausnehmung (8',8";27,28) aufweist und wobei der Antrieb mit einer Schnittstelle zur Einbringung von die genannten Bedingungen darstellenden Signalen versehen ist, mit einem, um eine Achse (17) drehbar gelagerten, einen Träger entweder wenigstens eines Riegelteiles (14, 15; 29, 30) oder einer Ausnehmung (8',8";27,28) bildenden Wipphebel (8), mit einer mit dem Wählhebel (1) in Wirkverbindung stehenden, einen Träger wenigstens einer Ausnehmung oder eines Riegelteiles bildenden Übertragungseinrichtung, welche mit der Maßgabe angelegt ist, dass über den Wählhebel (1) bei Wählbewegungen ausgeübte Kräfte im Bereich der miteinander im Eingriff stehenden Riegelteile (14,15;29,30) und Ausnehmungen (8',8";27,28) lediglich untersetzt wirksam sind und ein Lösen des Eingriffs mit den Mitteln des genannten Antriebs nicht behindern, **dadurch gekennzeichnet, dass** die Übertragungseinrichtung durch wenigstens ein, um eine gehäusefeste Achse (10,12;23,24) drehbar gelagertes, mit einem, einen Zapfen (16) aufnehmenden Führungsschlitz (11',13';25,26) versehenes Verriegelungselement gebildet ist, dass der Zapfen (16) an einem, mit dem Wählhebel (1) in fester Verbindung stehenden Bauteil angeordnet ist, und dass der Abstand der Achse des wenigstens einen Verriegelungselementes (10,12; 23,24) von der Achse (16') des Zapfens (16) einerseits und der Abstand der Achse des wenigstens einen Verriegelungselementes (10,12;23,24) von dem Eingriffspunkt des Riegelteils (14,15,;29,30) mit der jeweiligen Ausnehmung (8',8";27,28) andererseits mit der Maßgabe angelegt sind, dass eine Untersetzung der über den Wählhebel (1) ausgeübten und über den Zapfen (16) auf den genannten Eingriffspunkt übertragenen Kraft gegeben ist.

2. Schalteinrichtung nach Anspruch 1, **dadurch gekennzeichnet, dass** sich das Riegelteil (14,15;29,30) bzw. die Ausnehmung (8',8";27,28) an dem von der Achse (10,12;23,24) entfernt gelegenen, dem Wipphebel (8) zugekehrten Abschnitt des Verriegelungselementes befinden.

3. Schalteinrichtung nach Anspruch 1 oder 2, **dadurch gekennzeichnet, dass** das Verriegelungselement als langgestreckter, um die gehäusefeste Achse (10,12) drehbar gelagerter Schwenkhebel (11,13) ausgebildet ist.

4. Schalteinrichtung nach Anspruch 1 oder 2, **dadurch gekennzeichnet, dass** das Verriegelungselement als Scheibenelement (21,22) ausgebildet ist, dass um die gehäusefeste Achse (23,24) drehbar gelagert ist.

5. Schalteinrichtung nach einem der Ansprüche 2 bis 4, **dadurch gekennzeichnet, dass** der Führungsschlitz (11',13';25,26) als geradliniger, den Zapfen (16) gleitfähig aufnehmender Schlitz ausgebildet ist und dass sich der Schlitz - in einer Ebene senkrecht zu der Achse (2) des Wählhebels (1) und der Achse (16') des Zapfens (16) gesehen - unter einem Winkel bezüglich einer diese Achsen verbindenden Linie erstreckt.

6. Schalteinrichtung nach einem der vorangegangenen Ansprüche 1 bis 5, **dadurch gekennzeichnet, dass** ein Verriegelungselement zur Verriegelung einer Wählposition des Wählhebels eingerichtet ist.

7. Schalteinrichtung nach einem der vorangegangenen Ansprüche 1 bis 6, **dadurch gekennzeichnet, dass** zwei Verriegelungselemente über den, deren Führungsschlitze (11',13';25,26) durchdringenden Zapfen (16) hinsichtlich ihrer Drehbewegungen um die Achsen (10,12;23,24) kinematisch gekoppelt sind, dass der Wipphebel (8) zur Darstellung von zwei Verriegelungsstellungen bzw. Wählpositionen mit voneinander beabstandeten Riegelteilen (29,30) bzw. Ausnehmungen (8', 8") versehen und mittels des genannten Antriebes um die Achse (17) zur Darstellung von zwei, den beiden Verriegelungsstellungen entsprechenden Drehwinkelstellungen bzw. Wählpositionen schwenkbar ist.

8. Schalteinrichtung nach Anspruch 7, **dadurch gekennzeichnet, dass** die Achsen (10,12;23,24) der Verriegelungselemente in Anpassung an den Schwenkwinkel des Wählhebels (1) um die Achse (2), die Lage des Wipphebels (8) und den Abstand der auf diesem befindlichen Riegelteile (29,30) bzw. Ausnehmungen (8',8") voneinander mit der Maßgabe angeordnet sind, dass mittels des Antriebs der Eingriffzustand in definierten Schwenkwinkel- bzw. Wählstellungen des Wählhebels (1) herstellbar ist.

9. Schalteinrichtung nach einem der vorangegangenen Ansprüche 1 bis 8, **dadurch gekennzeichnet, dass** der um die Achse (17) drehbare Wipphebel (8) in der einen Umdrehungsrichtung mit einer Feder beaufschlagt und in der anderen Umdrehungsrichtung mit dem Antrieb in Wirkverbindung steht.

10. Schalteinrichtung nach einem der vorangegangenen Ansprüche 1 bis 9, **dadurch gekennzeichnet, dass** der Antrieb im Wesentlichen aus einem geradlinig beweglich angeordneten Anker (19) und einem Wicklungssystem besteht, dass der Anker (19) mit dem Wipphebel (8) um die Achse (17) in eine Antriebsverbindung bringbar ist, so dass eine Drehbewegung des Wipphebels (8) um die Achse (17) sowie die Aufbringung einer Verriegelungskraft in der einen Umdrehungsrichtung des Wipphebels (8) magnetisch und in der anderen Richtung über eine Feder bewirkbar ist.

11. Schalteinrichtung nach einem der vorangegangenen Ansprüche 1 bis 8, durch **gekennzeichnet**, dass der Antrieb im Wesentlichen aus einem beweglich angeordneten Anker (19) und zwei Wicklungssystemen von entgegengesetzter magnetischer Polarität besteht, dass der Anker mit dem Wipphebel (8) um die Achse (17) in einer Antriebsverbindung steht, wobei die Verbindung des Wipphebels (8) mit dem Anker mit der Maßgabe eingerichtet ist, dass entsprechend der Bestromung des einen oder des anderen Wicklungssystems eine Zug- oder eine Druckkraft über den Anker übertragen werden kann, so dass eine Drehbewegung des Wipphebels (8) um die Achse (17) sowie die Aufbringung einer Verriegelungskraft in beiden Umdrehungsrichtungen magnetisch mittels des einen oder des anderen Wicklungssystems bewirkbar sind

12. Schalteinrichtung nach einem der vorangegangenen Ansprüche 1 bis 8 **dadurch gekennzeichnet, dass** der Antrieb im Wesentlichen aus zwei beweglich angeordneten Ankern besteht, denen jeweils ein Wicklungssystem zugeordnet ist und dass die Anker beiderseits der Achse (17) des Wipphebels (8) mit diesem in einen Eingriff bringbar sind, so dass eine Drehbewegung des Wipphebels (8) um die Achse (17) sowie die Aufbringung einer Verriegelungskraft durch Bestromung des Wicklungssystems des einen oder des anderen Ankers magnetisch bewirkbar sind.

## Claims

1. Shifting device for a torque converter transmission of a motor vehicle having a selection lever (1), which is rotatably mounted about a spindle (2) in a housing in order to produce selection movements, and having a locking mechanism (6) which is arranged to block or release selection movements of the selection lever (1) according to preset conditions, wherein the locking mechanism (6) has a drive for producing and releasing a positive-locking engagement between a lock part (14, 15; 29, 30) and a recess (8', 8"; 27, 28), and wherein the drive is provided with an interface for introducing signals representing the said conditions, having a rocker lever (8) which is rotatably mounted about a spindle (17) and forms a support either for at least one lock part (14, 15; 29, 30) or a recess (8', 8"; 27, 28), having a transmission device operatively connected to the selection lever (1), forming a support for at least one recess or a lock part and being arranged such that, by means of the selection lever (1), forces exerted during selection movements are only effective in a reducing manner in the region of the mutually engaged lock parts (14, 15; 29, 30) and recesses (8', 8"; 27, 28), and do not hinder release of the engagement with the means of the said drive, **characterised in that** the transmission device is formed by at least one locking element which is rotatably mounted about a spindle (10, 12; 23, 24) fixed on the housing and is provided with a guide slot (11', 13'; 25, 26) receiving a spigot (16), that the spigot (16) is disposed on a component fixedly connected to the selection lever (1), and that the spacing between the spindle of the at least one locking element (10, 12; 23, 24) and the spindle (16') of the spigot (16) on the one hand and the spacing between the spindle of the at least one locking element (10, 12; 23, 24) and the engagement point of the lock part (14, 15; 29, 30) with the respective recess (8', 8"; 27, 28) on the other hand are arranged such that a reduction is produced in the force exerted via the selection lever (1) and transmitted via the spigot (16) onto the said engagement point.

2. Shifting device as claimed in claim 1, **characterised in that** the lock part (14, 15; 29, 30) and/or the recess (8', 8"; 27, 28) are located on the portion of the locking element facing the rocker lever (8) and located remote from the spindle (10, 12; 23, 24).

3. Shifting device as claimed in claim 1 or 2, **characterised in that** the locking element is formed as a longitudinally extended pivot lever (11, 13) rotatably mounted about the spindle (10, 12) fixed to the housing.

4. Shifting device as claimed in claim 1 or 2, **characterised in that** the locking element is formed as a disc element (21, 22) which is rotatably mounted about the spindle (23, 24) fixed to the housing.

5. Shifting device as claimed in any one of claims 2 to 4, **characterised in that** the guide slot (11', 13'; 25, 26) is formed as a straight slot receiving the spigot (16) in a sliding manner, and that the slot - as seen in a plane perpendicular to the spindle (2) of the selection lever (1) and the spindle (16') of the spigot (16) - extends at an angle with respect to a line connecting these spindles.

6. Shifting device as claimed in any one of the preceding claims 1 to 5, **characterised in that** a locking element is arranged to lock a selected position of the selection lever.

7. Shifting device as claimed in any one of the preceding claims 1 to 6, **characterised in that**, via the spigot (16) which passes through their guide slots (11', 13'; 25,26), two locking elements are kinematically coupled with respect to their rotational movements about the spindles (10, 12; 23, 24), that, in order to produce two locking positions or selected positions, the rocker lever (8) is provided with mutually spaced lock parts (29, 30) or recesses (8', 8") and, in order to produce two rotational angle positions or selected positions corresponding to the two locking positions, it can be pivoted about the spindle (17) by means of the said drive.

8. Shifting device as claimed in claim 7, **characterised in that**, in adaptation to the pivot angle of the selection lever (1) about the spindle (2), the position of the rocker lever (8) and the mutual spacing between the recesses (8', 8") or the lock parts (29, 30) located on the rocker lever, the spindles (10, 12; 23, 24) of the locking elements are disposed such that by means of the drive the engagement condition can be produced in defined pivot angle or selected positions of the selection lever (1).

9. Shifting device as claimed in any one of the preceding claims I to 8, **characterised in that** the rocker lever (8) which can rotate about the spindle (17) is acted upon by a spring in one rotational direction and is operatively connected to the drive in the other rotational direction.

10. Shifting device as claimed in any one of the preceding claims 1 to 9, **characterised in that** the drive consists essentially of an anchor (19), which is disposed so as to move in a straight line, and of a winding system, that the anchor (19) can be brought into a driving connection with the rocker lever (8) about the spindle (17) so that a rotational movement of the rocker lever (8) about the spindle (17) and the application of a locking force can be effected magnetically in one rotational direction of the rocker lever (8) and by means of spring in the other direction.

11. Shifting device as claimed in any one of the preceding claims 1 to 8, **characterised in that** the drive consists essentially of a moveably disposed anchor (19) and two winding systems of opposing magnetic polarity, that the anchor is drivingly connected to the rocker lever (8) about the spindle (17), wherein the connection of the rocker lever (8) to the anchor is arranged such that a pulling or pushing force can be transmitted via the anchor depending on the current feed to the respective winding system, so that a rotational movement of the rocker lever (8) about the spindle (17) and the application of a locking force in both rotational directions can be effected magnetically by means of the respective winding system.

12. Shifting device as claimed in any one of the preceding claims I to 8, **characterised in that** the drive consists essentially of two moveably disposed anchors, to each of which a winding system is allocated and that the anchors on both sides of the spindle (17) of the rocker lever (8) can be brought into engagement therewith so that a rotational movement of the rocker lever (8) about the spindle (17) and the application of a locking force can be effected magnetically by the current feed of the winding system of the respective anchor.

## Revendications

1. Dispositif de changement de vitesse pour une boîte de vitesses d'un véhicule automobile ayant un levier de vitesses (1) monté à rotation dans un boîtier autour d'un axe (2) pour effectuer des mouvements de sélection et un mécanisme de verrouillage (6), qui est configuré en fonction de conditions prédéfinissables pour bloquer ou libérer des mouvements de sélection du levier de vitesses (1), dans lequel le mécanisme de verrouillage (6) présente un entraînement pour enclencher et désenclencher un engagement par complémentarité de formes entre une partie de verrou (14,15 ; 29,30) et un évidement (8',8" ; 27,28) et dans lequel l'entraînement est pourvu d'une interface pour fournir des signaux représentant lesdites conditions, avec un levier basculant (8) monté à rotation autour d'un axe (17) et formant un support d'au moins une partie de verrou (14,15 ; 29,30) ou d'au moins un évidement (8',8" ; 27,28), avec un dispositif de transmission coopérant avec le levier de vitesses (1) et formant un support d'au moins un évidement ou d'au moins une partie de verrou, lequel dispositif est configuré pour que les forces exercées via le levier de vitesses (1) lors de mouvements de sélection n'agissent qu'à l'état réduit dans la zone des parties de verrou (14,15 ; 29,30) et des évidements (8',8" ; 27,28) en engagement mutuel et n'empêchent pas un désenclenchement de l'engagement avec les moyens dudit entraînement, **caractérisé en ce que** le dispositif de transmission est formé d'au moins un élément de verrouillage monté à rotation autour d'un axe (10,12; 23,24) fixé au boîtier et pourvu d'une fente de guidage (11',13' ; 25,26) recevant un tourillon (16), **en ce que** le tourillon (16) est agencé sur un composant en liaison fixe avec le levier de vitesses (1) et **en ce que** la distance de l'axe du au moins un élément de verrouillage (10,12 ; 23,24) à l'axe (16') du tourillon (16), d'une part, et la distance de l'axe du au moins un élément de verrouillage (10,12 ; 23,24) au point d'engagement de la partie de verrou (14,15 ; 29,30) avec l'évidement respectif (8',8" ; 27,28), d'autre part, sont réglées de manière qu'une réduction de la force exercée via le levier de vitesses (1) et transmise via le tourillon (16) sur le point d'engagement cité soit obtenue.

2. Dispositif de changement de vitesse selon la revendication 1, **caractérisé en ce que** la partie de verrou (14,15 ; 29,30) ou l'évidement (8',8" ; 27,28) se trouve sur la partie de l'élément de verrouillage située à distance de l'axe (10,12 ; 23,24) et tournée vers le levier basculant (8).

3. Dispositif de changement de vitesse selon la revendication 1 ou 2, **caractérisé en ce que** l'élément de verrouillage se présente sous la forme d'un levier pivotant (11,13) allongé monté à rotation autour de l'axe (10,12) fixé au boîtier.

4. Dispositif de changement de vitesse selon la revendication 1 ou 2, **caractérisé en ce que** l'élément de verrouillage se présente sous la forme d'un élément en forme de plaque (21,22), qui est monté à rotation autour de l'axe (23,24) fixé au boîtier.

5. Dispositif de changement de vitesse selon l'une quelconque des revendications 2 à 4, **caractérisé en ce que** la fente de guidage (11',13' ; 25,26) se présente sous la forme d'une fente rectiligne recevant à coulissement le tourillon (16) et **en ce que** la fente - observée dans un plan perpendiculaire à l'axe (2) du levier de vitesses (1) et à l'axe (16') du tourillon (16) - s'étend selon un certain angle par rapport à une ligne reliant ces axes.

6. Dispositif de changement de vitesse selon l'une quelconque des revendications 1 à 5, **caractérisé en ce qu'**un élément de verrouillage est configuré pour verrouiller une position de sélection du levier de vitesses.

7. Dispositif de changement de vitesse selon l'une quelconque des revendications 1 à 6, **caractérisé en ce que** deux éléments de verrouillage sont couplés cinématiquement via le tourillon (16) traversant leurs fentes de guidage (11',13'; 25,26) quant à leurs mouvements de rotation autour des axes (10,12 ; 23,24) et **en ce que** le levier basculant (8) est pourvu, pour représenter deux positions de verrouillage ou positions de sélection de parties de verrou (29,30) ou d'évidements (8',8") distants l'un de l'autre et peut pivoter au moyen dudit entraînement autour de l'axe (17) pour représenter deux positions d'angle de rotation ou positions de sélection correspondant aux deux positions de verrouillage.

8. Dispositif de changement de vitesse selon la revendication 7, **caractérisé en ce que** les axes (10,12 ; 23,24) des éléments de verrouillage sont agencés l'un par rapport à l'autre, en adaptation à l'angle de pivotement du levier de vitesses (1) autour de l'axe (2), à la position du levier basculant (8) et à la distance des parties de verrou (29,30) ou des évidements (8',8") se trouvant sur celui-ci, de manière que l'état d'engagement puisse être instauré au moyen de l'entraînement dans des positions d'angle de pivotement ou des positions de sélection définies du levier de vitesses (1).

9. Dispositif de changement de vitesse selon l'une quelconque des revendications 1 à 8, **caractérisé en ce que** le levier basculant (8) rotatif autour de l'axe (17) est sollicité dans l'un des sens de rotation par un ressort et coopère avec l'entraînement dans l'autre sens de rotation.

10. Dispositif de changement de vitesse selon l'une quelconque des revendications 1 à 9, **caractérisé en ce que** l'entraînement est essentiellement constitué d'un induit (19) mobile linéairement et d'un système d'enroulement, **en ce que** l'induit (19) peut être amené en liaison d'entraînement avec le levier basculant (8) autour de l'axe (17) de manière à pouvoir engendrer un mouvement de rotation du levier basculant (8) autour de l'axe (17) et l'application d'une force de verrouillage par voie magnétique dans l'un des sens de rotation du levier basculant (8) et dans l'autre sens par le biais d'un ressort.

11. Dispositif de changement de vitesse selon l'une quelconque des revendications 1 à 8, **caractérisé en ce que** l'entraînement est constitué essentiellement d'un induit (19) mobile et de deux systèmes d'enroulement de polarité magnétique opposée, **en ce que** l'induit est en liaison d'entraînement avec le levier basculant (8) autour de l'axe (17), dans lequel la liaison du levier basculant (8) avec l'induit est aménagée de manière qu'en fonction de la mise sous tension de l'un ou de l'autre système d'enroulement, une force de traction ou une force de pression puisse être transmise via l'induit afin de pouvoir engendrer un mouvement de rotation du levier basculant (8) autour de l'axe (17) et l'application d'une force de verrouillage dans les deux sens de rotation par voie magnétique au moyen de l'un ou l'autre système d'enroulement.

12. Dispositif de changement de vitesse selon l'une quelconque des revendications 1 à 8, **caractérisé en ce que** l'entraînement est constitué essentiellement de deux induits mobiles, auxquels est affecté respectivement un système d'enroulement et **en ce que** les induits peuvent être amenés en engagement avec le levier basculant (8) de part et d'autre de l'axe (17) du levier basculant (8) de manière à pouvoir engendrer par voie magnétique un mouvement de rotation du levier basculant (8) autour de l'axe (17) et l'application d'une force de verrouillage par alimentation en courant du système d'enroulement de l'un ou l'autre induit.
